# EUROPEAN PATENT SPECIFICATION

(11) **EP 0 910 019 B1**
(45) Date of publication and mention of the grant of the patent: **19.03.2003**
(21) Application number: 98114405.8
(22) Date of filing: 31.07.1998
(51) Int. Cl.: G06F 11/14

(54) **Remote backup system**
Fernsicherungssystem
Système de sauvegarde à distance

(30) Priority: 14.10.1997 GB 9721637
(43) Date of publication of application: 21.04.1999
(73) Proprietor: Fujitsu Services Limited, London, EC2A 1SL (GB)
(72) Inventor: Gent, David Peter, Sale, Cheshire M33 6QP (GB)
(74) Representative: Guyatt, Derek Charles

(56) References cited:
- EP-A- 0 650 122
- US-A- 5 133 065
- US-A- 5 537 533

## Description

This invention relates to a remote backup system for computers.

The desirability of keeping backup copies of computer data is well known. This involves taking backup copies regularly, ensuring that the backup copies are kept in a safe and secure place, preferably in a different building to the master copy, and restoring the data rapidly if the master copy is lost or corrupted. All this can impose a significant overhead on businesses, especially for small or medium-sized enterprises (SMEs).

The Legato Networker is a product which enables backup to be performed automatically in a computer network. Specifically, it enables a backup server to send periodic requests to a number of computers in the network, asking them to send backup copies of their data. When the backup server receives the data, it writes the data into a backup store, such as a magnetic tape storage device.

EP-A-0650122 describes a backup system in which a number of computers are connected to an archive, by way of a network. The computers periodically back up their files, by transmitting them to the archive.

However, this is not of any assistance to SMEs, who do not have their own in-house computer networks, and who cannot afford the overhead cost of a dedicated backup server. The object of the present invention is to provide a novel automatic backup system for computer data, which is suitable for use by SMEs.

According to the invention there is provided a remote backup system as claimed in claim 1.

It can be seen that, rather than performing backups over a private in-house network as is conventionally the case, the invention uses a public ISDN network. This means that the client computers may belong to individual SMEs, while the backup server computer may belong to a service organisation, which provides a backup service to the SMEs. The service organisation may charge the SMEs for the backup service on a usage basis.

It should be noted that although this backup service is of special interest to SMEs, it could also be used by larger organisations.

### Brief Description of the Drawings

Figure 1 is a block diagram of a remote backup system including a number of client computers and a backup server.

Figure 2 is a block diagram of the backup server.

### Description of an Embodiment of the Invention

One remote backup system embodying the invention will now be described by way of example with reference to the accompanying drawings.

### Overall view of the remote backup system

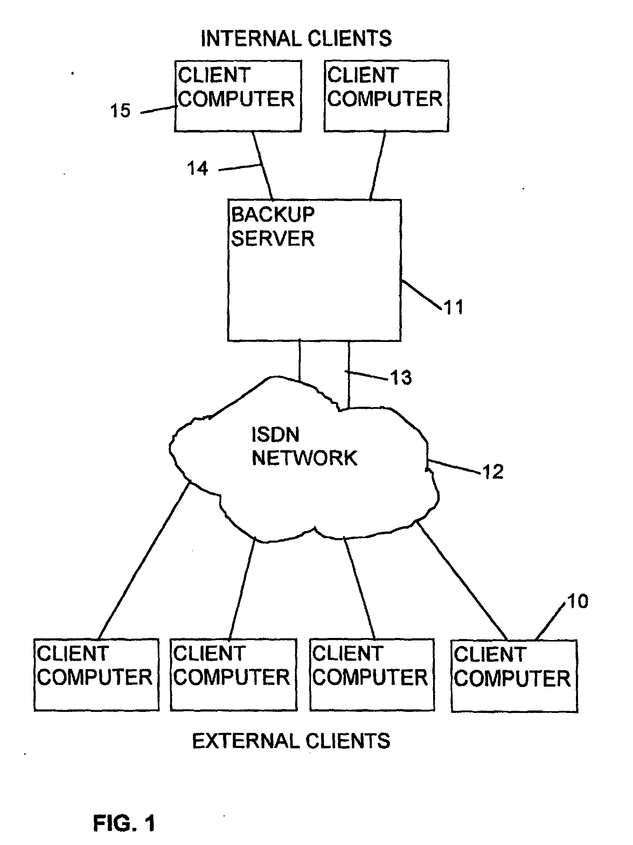

Referring to Figure 1, the remote backup system involves a number of client computers 10 (referred to herein as external clients), and a backup server 11. The external clients belong to individual organisations, typically SMEs, and are located at the premises of these organisations. The backup server belongs to a service provider, and is located at the service provider's premises, remote from the external clients.

The backup server is connected to the external clients by way of a public ISDN network (Integrated Services Digital Network) 12. The backup server and external clients are connected to the ISDN network by way of respective ISDN routers (not shown). In this example, 3Com "OfficeConnect" Netbuilder ISDN routers are used. The backup server has two ISDN-30 lines 13 dedicated to the backup service.

The backup server is also connected, by way of private links 14, to other client computers 15, referred to herein as internal clients. The internal clients may belong to the service provider itself.

The client computers 10, 15 may comprise machines running under a variety of different operating systems such as for example, Windows NT, Windows 95, UNIX, Macintosh, or NetWare. Each also runs the Legato Networker client software, in the version appropriate to its particular operating system.

Clients can subscribe to the remote backup service by paying an initial set-up fee, which includes the necessary software to access the service. They then pay a monthly subscription fee, in addition to a usage fee based on the amount of backups performed.

### Backup server

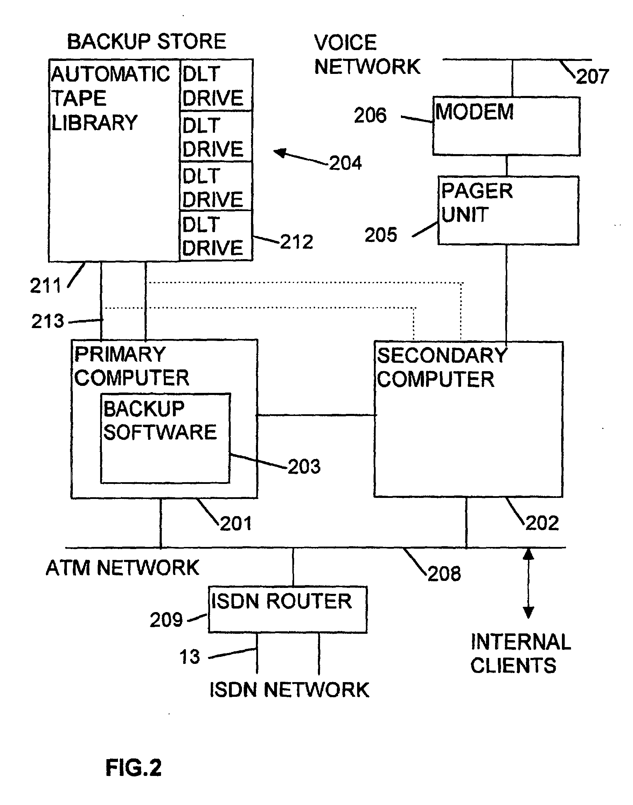

Referring now to Figure 2, the backup server comprises a pair of Fujitsu-ICL J582i Superserver computers 201, 202 running under the Windows NT operating system. The computers are connected together in a high-availability configuration using the ICL High Availability Manager (HAM). One of these computers 201 is designated the primary, and the other computer 202 is designated the secondary. In normal operation, the primary computer runs the Legato Networker backup software 203, which provides the required backup service. The primary computer is connected to a backup store 204, while the secondary is connected to a Scrambler pager unit 205 which in turn is connected, via a modem 206, to the public telephone voice network 207.

Both the primary and secondary computers are connected to an internal ATM (Asynchronous Transfer Mode) network 208, which in turn is connected, via ISDN router 209, to the pair of ISDN lines 13. These lines can be dynamically configured to allow up to thirty ISDN-2, or two ISDN-30 external clients simultaneously to access the backup service, in addition to the internal clients. An ISDN link is established only when it is required, and is closed when there is no traffic across the link. The ATM network is also connected to the internal client computers 15.

The backup store 204 comprises a StorageTek 9710 automated tape library 211 with four digital linear tape (DLT4000) drives 212. The automated tape library 211 is a robotic system that provides automatic storage, selection, loading and unloading of DLT cartridges. It has a capacity of up to 252 cartridges, each of which can hold 40 Gigabytes of compressed data, giving a total capacity of over 10 Terabytes. The backup store could be expanded, if required, by adding more DLT drives. The primary computer is connected to the automated tape library 211 by way of two SCSI connections 213.

In the event of a failure of the primary computer 201, the High Availability Manager will switch control to the secondary computer 202. The secondary will then send a message, via the pager unit 205, to an alphanumeric pager device so as to alert a nominated service technician. The technician will attend the failed system, and reconfigure it by connecting the backup store to the secondary instead of the primary, and will then restart the Networker software 203 on the secondary computer.

### Backup procedure

The backup server maintains an internal table, which specifies an agreed schedule for backups. This schedule can specify backups for individual clients on a daily, weekly, monthly or even yearly basis, and specifies an agreed time at which the server should call each client. This will normally be out of business hours, between 6pm and 8am, but can vary according to the type of business and its normal working day. When a scheduled backup becomes due, the backup server sends a message to the client computer at the agreed time, to initiate the backup. The client must ensure that the client computer is left switched on during the agreed backup period.

When the client computer receives this message, the client software uses the Calling Line Identification (CLI) service and System Caller Identification to check that the call is genuine. Assuming that this check is satisfactory, the client software then starts to send its backup data to the server, over the ISDN network. A full backup may be carried out, or just an incremental backup (i.e. only those files that have changed since the last backup), at the choice of the client. The data is compressed by the client software prior to transmission, to reduce transmission time and also backup storage space. Alternatively, the data may be encrypted by the client software prior to transmission, if the client requires protection for the data and has suitable encryption software.

When the backup server receives the backup data from the client, it writes the data into the automated tape library. The backup server keeps a record of the client identity, and the time and date of each backup, and the location to which the backup data was written, so as to enable retrieval of the data at a later date if required. The backup server also updates a usage table, containing statistics of the amount of backups performed by each client, for charging purposes. Up to 32 clients can backup data to the service simultaneously. The data will be kept for thirty days by default, but this can be extended to whatever length of time is required by the client.

The client software also allows backups to be initiated manually by the client. This is useful if the client wishes to backup data after a large update and does not want to risk waiting until the next scheduled backup.

If a backup fails, the server will attempt to initiate it again up to five times. Also, if the backup fails part way through, the server will attempt to re-initiate the backup from the point of failure.

### Tape cloning

At the end of each day, the volumes created during that schedule are duplicated (cloned) on to another cartridge. This clone is then removed from the automated tape library and stored off-site. This provides an extra level of security for the backed-up data.

Tape cloning requires a substantial system resource and so is normally carried out once a day, typically after 8am each morning.

### Data recovery

Data recovery can be instigated by the client at any time, without prior arrangement with the service provider. The client simply selects a "restore" icon, which will cause the client software to send a recovery request message to the backup server.

When the backup server receives this message, it retrieves the data from the automated tape library, and sends it back to the client across the ISDN network. The client software will then automatically restore the data in the client computer.

### Summary

In summary, it can be seen that the backup server provides a remote backup service which exhibits the resilience, availability and manageability associated with large enterprise systems, in a small enterprise system environment. The backup procedure is completely automated, so that it is completely transparent to the user.

### Some possible modifications

It will be appreciated that many modifications may be made to the system described above without departing from the scope of the present invention. For example, instead of being connected via an ISDN network, the clients may be connected to the server by means of other types of public network, such as PSTN or the Internet. Also, instead of tape units, other forms of backup may be used, such as magnetic disks or writable CD ROMs. Furthermore, the backup server may be configured in other ways, instead of as a primary/secondary pair: for example, a pool of server computers may be used.

## Claims

1. A remote backup system comprising a plurality of client computers (10) and a backup server computer (11) remotely sited from the client computers and connected to the client computers by way of a network (12), said client computers and said backup server computer comprising means (209) for connecting to said network, the backup server computer comprising means (203) for sending periodic backup requests to the client computers, the client computers comprising means for responding to said backup requests by sending backup copies of their data to the backup server computer, and the backup server computer comprising means (204) for storing said backup copies,
**characterised in that**
(a) said network (12) is a public ISDN network;
(b) the backup server computer (11) initiates a regular backup by sending an initiating message to each of said client computers (10) over said public ISDN network; and
(c) each of said client computers (10) comprises means for identifying a calling number from which said initiating message originated, in order to check that the initiating message is genuine.

2. A remote backup system according to claim 1 wherein the backup server computer comprises means for keeping a record of the amount of backup activity performed by each individual client, and means for charging the clients for the backup service on a usage basis.

3. A remote backup system according to either preceding claim wherein the backup server computer comprises a pair of computers connected together in a high-availability configuration.

4. A remote backup system according to any preceding claim wherein the backup server computer comprises a pager unit for sending an alert message to a pager device in the event of a failure in the backup server.

5. A remote backup system according to any preceding claim wherein the backup server computer comprises means for periodically making a clone of the backed-up data, for off-site storage.

6. A remote backup system according to any preceding claim including a further plurality of client computers connected to said backup server computer by way of a private link.

## Patentansprüche

1. Fern-Backup-System mit einer Mehrzahl von Kunden-Rechnern (10) und einem Backup-Server-Rechner (11), der fern von den Kunden-Rechnern angeordnet und mit den Kunden-Rechnern über ein Netzwerk (12) verbunden ist, wobei die Kunden-Rechner und der Backup-Server-Rechner eine Vorrichtung (209) zum Anschließen an das Netzwerk aufweisen, wobei der Backup-Server-Rechner eine Vorrichtung (203) zum Senden von periodischen Backup-Anfragen an die Kunden-Rechner aufweist, und die Kunden-Rechner Vorrichtungen besitzen, um auf die Backup-Anfragen dadurch zu antworten, dass Backup-Kopien ihrer Daten an den Backup-Server-Rechner gesendet werden, und der Backup-Server-Rechner Vorrichtungen (204) zum Speichern der Backup-Kopien umfasst,
**dadurch gekennzeichnet, dass**
a) das Netzwerk (12) ein öffentliches ISDN-Netzwerk ist,
b) der Backup-Server-Rechner (11) ein regelmäßiges Backup dadurch auslöst, dass eine Auslöse-Nachricht an jeden der Kunden-Rechner (10) über das öffentliche ISDN-Netzwerk gesendet wird, und
c) jeder der Kunden-Rechner (10) eine Vorrichtung zum Identifizieren einer Rufzahl umfasst, aus der die Auslöse-Nachricht entsteht, um zu überprüfen, ob die Auslöse-Nachricht authentisch ist.

2. Fern-Backup-System nach Anspruch 1, bei dem der Backup-Server-Computer eine Vorrichtung aufweist, um eine Aufzeichnung des Umfangs an Backup-Aktivität vorzunehmen, die von jedem individuellen Kunden ausgeführt wird, und ferner eine Vorrichtung besitzt, um den Kunden mit den Kosten für den Backup-Service auf einer Nutzerbasis zu belasten.

3. Fern-Backup-System nach einem der Ansprüche 1 oder 2, bei dem der Backup-Server-Rechner ein Paar von Rechnern aufweist, die miteinander in einer Konfiguration mit hoher Verfügbarkeit verbunden sind.

4. Fern-Backup-System nach einem der Ansprüche 1 - 3, bei dem der Backup-Server-Computer eine Pager-Einheit zum Senden einer Alarm-Nachricht an eine Pager-Einrichtung im Falle eines Fehlers im Backup-Server besitzt.

5. Fern-Backup-System nach einem der vorausgehenden Ansprüche, bei dem der Backup-Server-Rechner eine Vorrichtung zum periodischen Herstellen eines Klons der Backup-Daten für eine außerhalb liegende Speicherung aufweist.

6. Fern-Backup-System nach einem der vorausgehenden Ansprüche, mit einer weiteren Mehrzahl von Kunden-Rechnern, die mit dem Backup-Server-Computer über eine private Verknüpfung verbunden sind.

## Revendications

1. Un système de sauvegarde à distance comprenant une pluralité d'ordinateurs clients (10) et un ordinateur serveur de sauvegarde (11) géographiquement situé en un lieu différent de celui des ordinateurs clients, et connecté aux ordinateurs clients au moyen d'un réseau (12), lesdits ordinateurs clients et ledit ordinateur serveur de sauvegarde comprenant des dispositifs (209) pour connecter au dit réseau, l'ordinateur serveur de sauvegarde comprenant des dispositifs (203) pour transmettre aux ordinateurs clients des requêtes périodiques de sauvegarde, les ordinateurs clients comprenant des dispositifs pour répondre aux dites requêtes de sauvegarde par l'envoi de copies de sauvegarde de leurs données à l'ordinateur serveur de sauvegarde, et l'ordinateur serveur de sauvegarde comprenant des dispositifs (204) pour stocker lesdites copies de sauvegarde,
**Caractérisées en ce que**
(a) le dit réseau (12) est un réseau public ISDN
(b) l'ordinateur serveur de sauvegarde (11) initialise une sauvegarde régulière en envoyant un message aux dits ordinateurs clients (10) en utilisant ledit réseau public ISDN; et
(c) chacun desdits ordinateurs clients (10) comprenant des dispositifs pour identifier le numéro d'appel à partir duquel le message d'initialisation a été envoyé, afin de vérifier que le message d'initialisation est authentique.

2. Un système de sauvegarde à distance suivant la Revendication 1 dans lequel l'ordinateur serveur de sauvegarde comprend des dispositifs pour garder la trace du volume d'activité de sauvegarde effectué par chacun des clients individuels, et les dispositifs pour facturer les clients pour le service de sauvegarde en fonction de l'utilisation.

3. Un système de sauvegarde à distance selon l'une ou l'autre des revendications précédentes dans lequel l'ordinateur serveur de sauvegarde est composé d'une paire d'ordinateurs connectés l'un à l'autre dans une configuration de grande disponibilité.

4. Un système de sauvegarde à distance selon l'une quelconque des revendications précédentes dans lequel l'ordinateur serveur de sauvegarde comprend une unité de radiomessagerie pour envoyer un message d'alerte à un appareil de radiomessagerie alphanumérique (pager) dans l'éventualité d'une défaillance du serveur de sauvegarde.

5. Un système de sauvegarde à distance selon l'une quelconque des revendications précédentes dans lequel l'ordinateur serveur de sauvegarde comprend les dispositifs pour cloner les données sauvegardées, pour un stockage hors site.

6. Un système de sauvegarde à distance selon l'une quelconque des revendications précédentes comprenant une pluralité additionnelle d'ordinateurs clients connectés audit ordinateur serveur de sauvegarde par le moyen d'un réseau privatif.
